# EUROPEAN PATENT SPECIFICATION

(11) **EP 3 171 338 B1**
(45) Date of publication and mention of the grant of the patent: **20.11.2019**
(21) Application number: 16185418.7
(22) Date of filing: 24.08.2016
(51) Int. Cl.: G07B 17/00, G06Q 10/08, G06Q 50/32, A47G 29/14

(54) **A DEVICE FOR HANDLING CONSIGNMENTS AND A METHOD OF HANDLING CONSIGNMENTS**
VORRICHTUNG ZUR HANDHABUNG VON LIEFERUNGEN UND VERFAHREN ZUR HANDHABUNG VON LIEFERUNGEN
DISPOSITIF DE MANUTENTION D'ARRIVAGE/EXPÉDITION ET PROCÉDÉ DE MANUTENTION D'ARRIVAGE/EXPÉDITION

(30) Priority: 28.10.2015 PL 41459315
(43) Date of publication of application: 24.05.2017
(73) Proprietor: ASAPON Sp. z o.o., 02-017 Warszawa (PL)
(72) Inventor: Kunikowski, Adam, 01-210 Warszawa (PL)
(74) Representative: AOMB Polska Sp. z.o.o.

(56) References cited:
- EP-A1- 2 077 529
- EP-A2- 1 306 813
- WO-A1-2010/119465
- US-A- 5 570 290
- US-A1- 2001 042 055
- US-A1- 2002 007 281
- US-A1- 2006 287 870
- US-A1- 2007 174 217
- US-A1- 2008 154 721

## Description

The object of this specification is a device for handling consignments and a method of handling consignment carried out by this device. The specification is applicable for individual posting or picking up mail and/or postal and/or courier parcels.

Devices for picking up mail and parcels are known in the art, a patent application PL 400838 entitled "A modular self-service parcel pick-up station" discloses a modular self-service parcel pick-up station which is a device that allows for cooperation with ATM, payment terminals, control module of a self-service parcel pick-up station and any computing device with the Internet access equipped with a monitor or a touch screen monitor that allows for remote communication, while maintaining the functionality of the usual self-service parcel pick-up station and its visual monitoring and sound and light alarm. The modular self-service parcel pick-up station has a control unit connected to the compartment modules which have one communication cable and one power cable and are equipped with one compartment comprising one master module comprising at least a power supply system, a recording device, a modem/router with extended functionality, an alarm and a cooling-heating system.

However, the utility model application PL121349U entitled "A self-service parcel pick-up station" discloses a device - a self-service parcel pick-up station intended for installation in outdoors, which is resistant to weather conditions such as rain or snow, and sunlight and has the form of a stand-alone device with a control unit operated via the Internet, which is working with the system of compartments used for sending and receiving consignments by customers without the involvement of third parties. Both the postage and information on picking up consignments is generated via the Internet based on the account of the person logged into the system/portal of the self-service parcel pick-up station's owner. The self-service parcel pick-up station consists of a compartment control module placed inside the space frame surrounded by the external walls and the wall with the compartments. The base of the self-service parcel pick-up station rests on adjustable feet and is releasably coupled to the spatial frame enclosed by side walls on both sides side and from the back to lower enclosure, middle enclosure and central enclosure. From the front the self-service parcel pick-up station is provided with big compartments, medium compartments, small compartments and is covered with a roof top fastened releasably by means of pins in the slots.

A patent application PL368756 entitled "An electronic device and logistics system for a group of postal compartments for the packets" discloses a method and a logistics system for the electronic group of postal compartments for the packets and a device for processing postal items. A method according to the invention is characterized in that it comprises a plurality of electronic mail compartments for the packets, wherein several electronic mail compartments for the packets are assigned to one operating unit and the central control unit is being used for controlling the operating units.

A patent application PL376094 entitled "A method and device for processing graphic information placed on the surface of postal items" discloses a solution for a method that allows to check the franking rates on bulk packets and/or settlement of charges for bulk items. According to the invention, graphical information placed on the surface of the postal item is detected and the information is determined based on which the postal items are assigned to a given type of consignment. The address of the recipient, the data identifying a postal item and/or a sender of the postal item is determined, wherein the number of postal items, the sender sent is determined. Determined information is connected to each other in such a way that a structure of origin and the number of sent consignments is determined, and they are compared with a packet of delivery tasks, which contains the number of postal items and the structure of delivery, submitted by the client and/or packet of delivery tasks, including the number and the structure of delivery is created, and that the packet of the delivery tasks is compared with the record/set of customer data, which includes the value of surcharge paid in advance and/or limit for the values of surcharge.

The patent literature discloses also a U.S. Patent Application No. 5369221, (also as EP0758444) entitled "System for posting and storing consignments." This invention describes a device for posting and storing consignments. The device according to US5369221 includes a memory area, which is defined by the outer casing and the part of the customer interface, which includes the weighing unit and the device, such as a magnetic card reader to accept payments from the customer. The system may also include a control system which receives address information from the client via the numeric keypad, and then instructs the printer to print address labels. The system includes safeguards to prevent unauthorized access to the memory area, and will not issue a confirmation to the client until the internal sensors register the payment.

Further, a patent application DE102004014428 (A1) entitled "A system and a method for controlling the use of services provided by the system of correspondence tracking and monitoring of postal items," discloses a method that involves creating and storing records of the conditions in connection with franking a postal unit.

Patent application US2001/0042055 (A1) discloses further a parcel self-servicing machine.

The aim of the solution of the invention is to provide a device for posting and picking up consignments and a method for posting and picking up consignments using this device, to streamline the courier process, reducing the cost of the service, with transferring onto the sender the obligation to complete the formal activities.

The invention provides a method of handling consignments as defined by claim 1. Embodiments of the invention are defined in the dependent claims. Embodiments, aspects and examples not covered by the claims are presented to illustrate, and facilitate understanding of the claimed invention.

According to a non claimed aspect, a device for handling consignments, in the form of an external, stand-alone device, provided with a control computer with an Internet communication module, characterizes in that the front wall it has a chamber to throw in the consignments, a touch screen, payment terminal, a 2D-code reader and an address label printer, and a letters chamber lockable with an electro-lock equipped with a fill level sensor and a consignment chamber lockable with an electro-lock also provided with a fill level sensor, the control computer being connected to a payment terminal, touch screen, 2D-code reader, address label printer, electro-locks, consignment chamber fill level sensor and letters chamber fill level sensor, as well as the Internet communication module and short-range communication module, preferably a scales is mounted on a shelf in the chamber for throwing in the consignments, preferably a consignment compartment is provided with a damping mat, preferably the door of the letters chamber is provided with the insertion slot and preferably the device is equipped with a roof.

Preferably, the chamber for throwing in the consignments is equipped with a sliding drawer suspended on the guide provided with the trolley rollers coupled with a drive mounted on the guide.

Preferably, the chamber for throwing in the consignments has a form a rotary chamber axially fixed to the frame, with the rotary movement obtained by the axial drive, the rotary movement is restricted by the locking element, and the control computer is connected with the drive, and preferably also connected to the drive and the locking element.

Preferably, the chamber is mounted inside the throw-in chamber module.

Preferably, additionally it has at least one picking up module, comprising at least one picking up locker provided with the opening door lockable with an electro-lock, the electro-lock being connected to the control computer and controlled through it.

Preferably, it has a number of pick-up compartments, with different or the same height, separated by the shelves, and interconnected with a joint structure and the outer casing.

Further disclosed is a method of handling consignments, implemented in a system comprising the above-mentioned device for handling consignments, user terminal and the server and database, the database containing predefined users and data concerning their consignments, and the server has access to this database and can communicate with said device for handling consignments, and the user terminal via a telecommunication network, preferably the Internet, comprising the following steps:
a) the user using the user terminal logs on to the server via a telecommunication network, selects the type of service -postage, and then enters the data concerning the sent consignment into the database, in particular the size and weight of the consignment, address data, sender's contact information, and confirms their accuracy and the information is saved in the database, or if the user does not confirm the accuracy of the recipient address data and/or the sender contact details, then it is re-entered and data relating to the consignment is edited, and if the size and/or weight of the consignment entered by the user exceed the limit values, then the information of the large-size consignment is entered into the database.
b) optionally, the user pays for the consignment,
c) the server generates a unique consignment code which is sent from the server to the user terminal through a telecommunication network, in particular as an e-mail or a text message,
d) the user selects, in the device for handling consignments, posting a new consignment and enters said unique consignment code into the device for handling consignments, thereafter the device for handling consignments is sending the code entered through the telecommunication network to the server for verification, and then the server sends the result of the code verification back to the device for handling consignments,
e) the device for handling consignments opens the door to the throw-in chamber, the user places the consignment in the chamber and then the door of the chamber closes and the consignment is weighed and/or measured, and then through the communication between the device for handling consignments and the server the services available for the consignment are being checked, or verification of the fees, display of the information about the consignment, then the user confirms the purchase of the service, then the device for handling consignments sends the data concerning the consignment and disposition of postage of the consignment to the server of the courier operator, receives the feedback from the server of the courier operator, then retrieves the recipient address data from the server and prints the self-adhesive address label of the consignment and the postage confirmation for the user, and the user sticks the self-adhesive address label of the recipient on the consignment, or if it turns out that the consignment exceeds the maximum weight and/or size and/or was not paid for properly and/or there is no feedback from the server of the courier operator the chamber door opens and the consignment is returned to the sender,
f) the device for handling consignments moves the consignment automatically to the consignment chamber, by sliding movement of a drawer or by rotating movement of the rotary chamber, depending on the design of the device for handling consignments,
g) the device for handling consignments prints the consignment postage confirmation and/or the consignment postage confirmation will be sent to the user terminal through the telecommunication network, in particular as an e-mail or text message.

Preferably, in stage b) taking payments is performed via a payment terminal built-in the device for handling consignments or the Internet payment gateway or a terminal user or charging the prepayment disclosed in said database.

Preferably, the user terminal is a terminal built-in the device for handling consignments or a terminal separate from the device, in particular a desktop, laptop, tablet or mobile phone.

Preferably, in step d) entering said unique consignment code into the device for handling consignments is performed using one of the following methods: by entering a unique consignment code by the user on the touch screen, by scanning the QR code displayed on the user terminal using a scanner mounted in the device for handling consignments, through the communication between the device for handling consignments and the user terminal, particularly in Bluetooth technology, NFC *Near Field Communication*)*,* WiFi, or other methods of communication based on radio waves, ultrasonic communication, visible light communication, infrared, ultraviolet, scanning the barcode, QR code or other graphic code displayed on the screen of the user terminal.

Preferably, a method of handling consignments, implemented in a system comprising the above-mentioned device for handling consignments, user terminal and the server and database, the database containing predefined users and data concerning their consignments, and the server has access to this database and can communicate with said device for handling consignments, and the user terminal via a telecommunication network, preferably the Internet, comprising the following steps:
h) a deliverer logs into the device for handling consignments using the touch screen and scans the consignment label provided with a graphic code using a 2D-code reader,
i) the device for handling consignments connects to the server and retrieves information concerning the consignment from the database, in particular the dimensions and weight of the consignment, and according to them, selects the size of the pick-up compartment corresponding to the size of the consignment,
j) the device for handling consignments opens the door of the pick-up compartment using an electro-lock,
k) the deliverer places the consignment in the open pick-up compartment and the device for handling consignments connects to the server and sends to the database the information about delivering the consignment to a given device, the information beings saved in the database.
l) the server sends the information about delivering the consignment through the telecommunication network and the picking up digital or graphic code to the user terminal, in particular in the form of an e-mail or text message,
m) the user enters one or more of said picking up codes into the device for handling consignments,
n) the device for handling consignments identifies the consignments waiting to be picked up on the basis of entered verification codes.
o) the user confirms his presence in front of the device for handling consignments on the user terminal,
p) the device for handling consignments displays the consignments to be picked up on the touch screen and the user selects the consignments to be picked up on the touch screen,
q) the device for handling consignments opens the electrolocks of the pick-up compartments, assigned to the selected consignments,
r) the user takes the consignments out of the pick-up compartments and confirms the receipt of the consignments on the touch screen of the device for handling consignments,
s) the device for handling consignments connects to the servers and provides the information concerning the receipt of the consignments to the database, the information being saved in the database,
t) the serves sends the confirmations of consignment pick-up to the user terminal through the telecommunication network, in particular as an e-mail or a text message.

Preferably, in step m) entering one or more verification codes into the device for handling consignments is performed using one of the following methods: by entering a consignment verification code by the user on the touch screen, by scanning the QR code displayed on the user terminal using a scanner mounted in the device for handling consignments, through the communication between the device for handling consignments and the user terminal, particularly in Bluetooth technology, NFC *Near Field Communication*), WiFi, or other methods of communication based on radio waves, ultrasonic communication, visible light communication, infrared, ultraviolet, scanning the barcode, QR code or other graphic code displayed on the screen of the user terminal, wherein this communication may include the identification of the user terminal by the device for handling consignments.

Preferably, in step n) identification of the consignments waiting to be picked up takes place through the device for handling consignments connecting to the server, sending the verifications codes thereto and receiving the information from the database about the user and the consignments waiting to be picked up, assigned to or corresponding to these verification codes.

Preferably, in step n) identification of the consignments waiting to be picked up takes place through the device for handling consignments comparing the verification codes entered with the codes assigned to the consignments waiting to be picked up in the pick-up compartments of a given device.

Using a method according to the invention a process of posting a consignment is being optimised, minimizing the costs of this process, maximizing the quality parameters in the form of eliminating inconvenience of standing in line at the post office or waiting for a courier. A moment of posting depends on the sender, without undue delay caused by the activities of intermediaries.

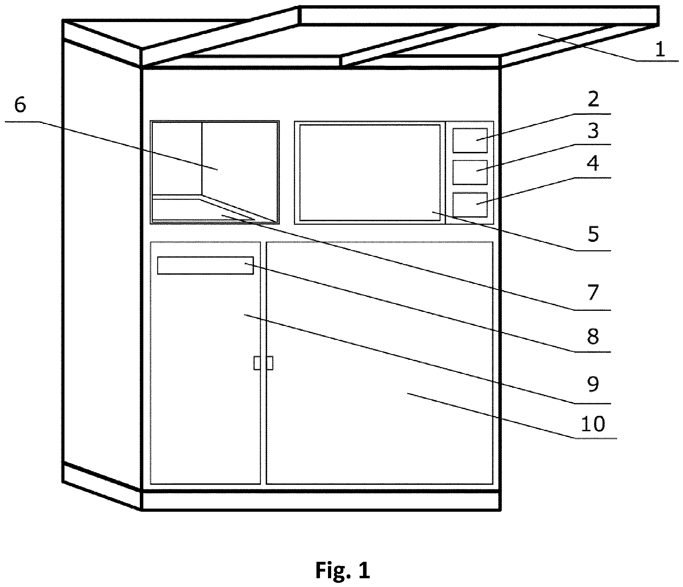

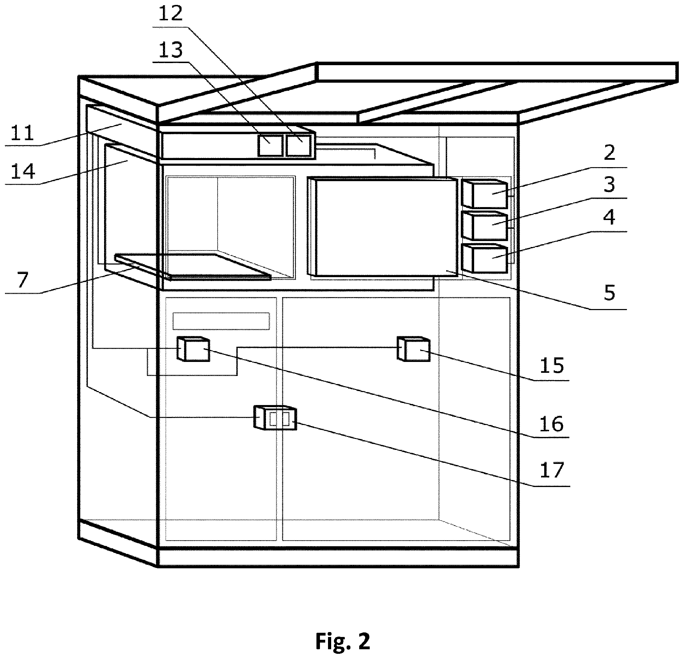

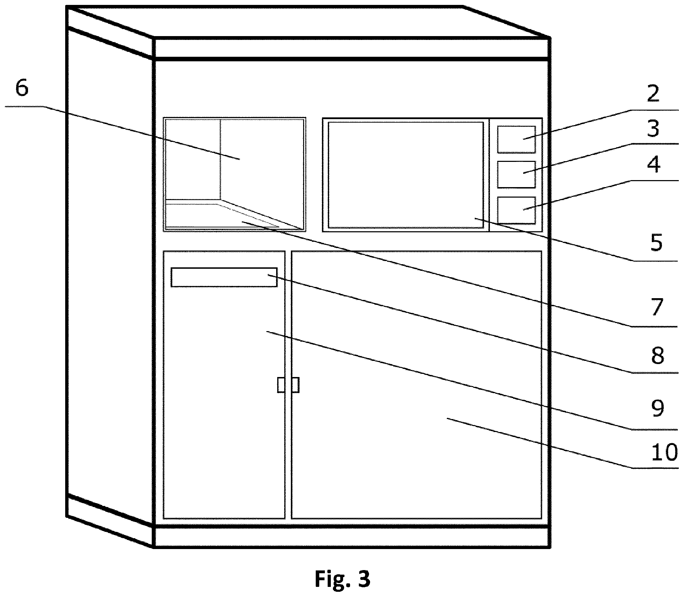

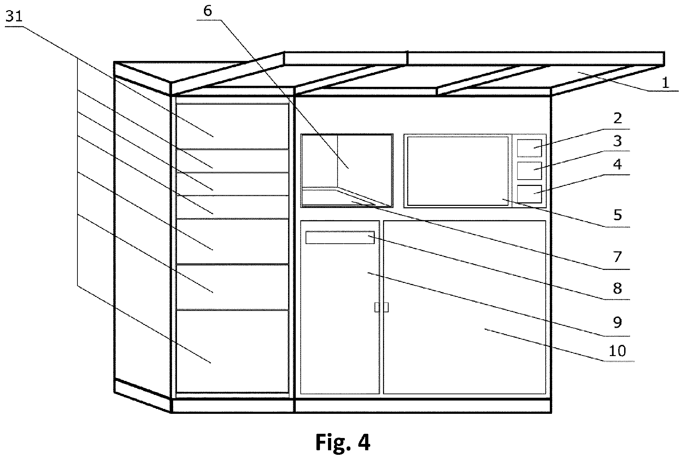

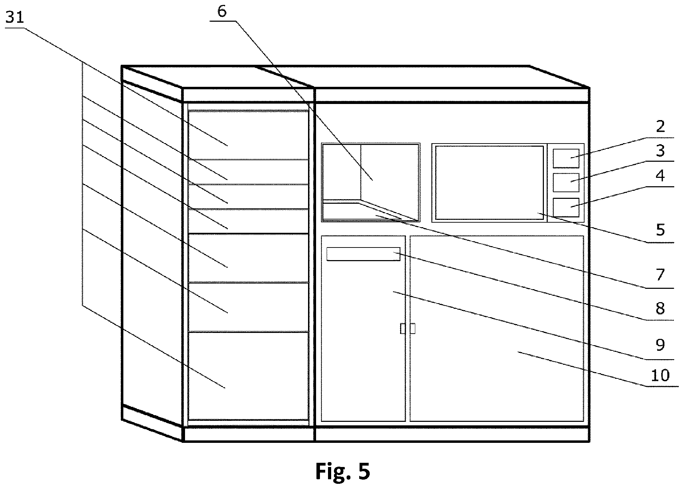

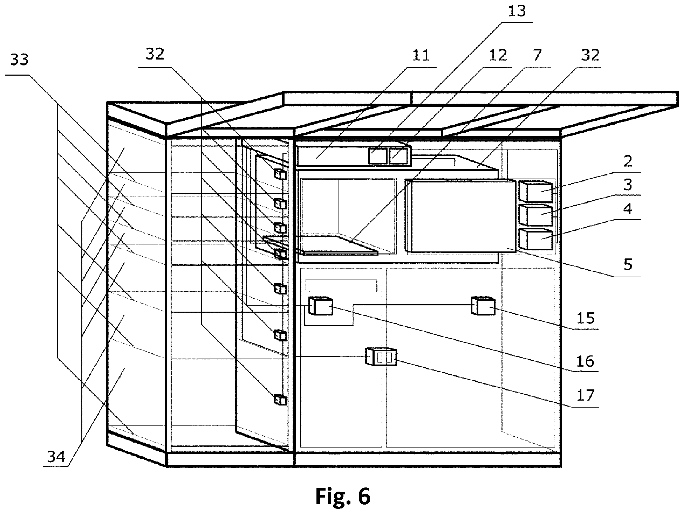

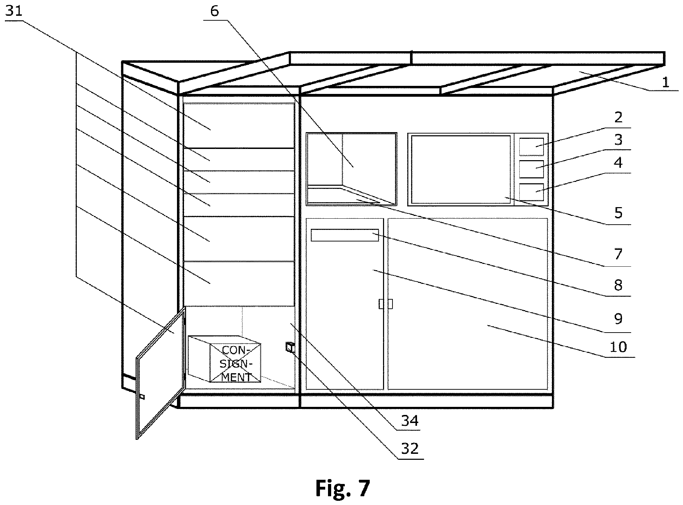

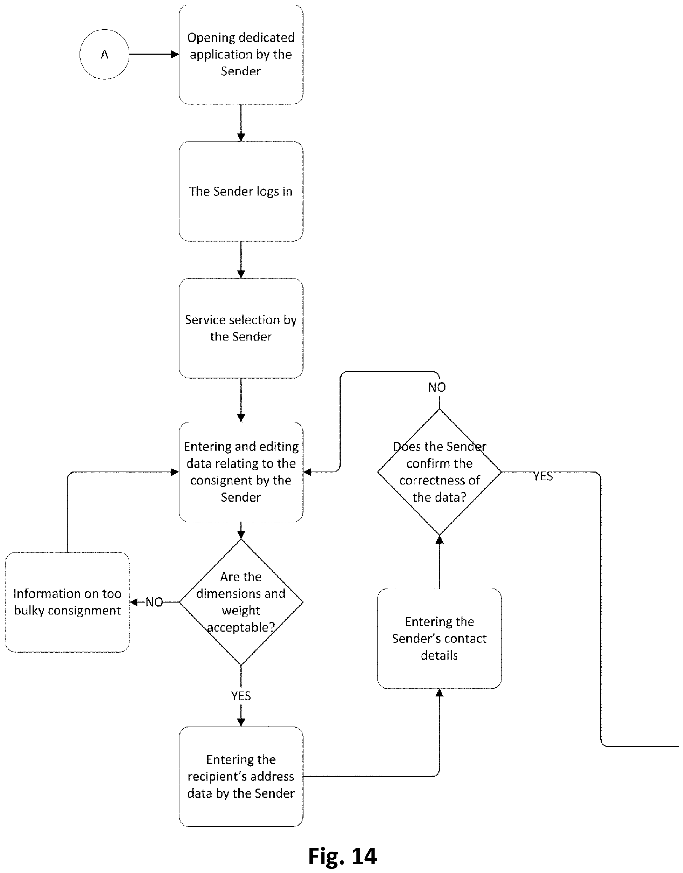

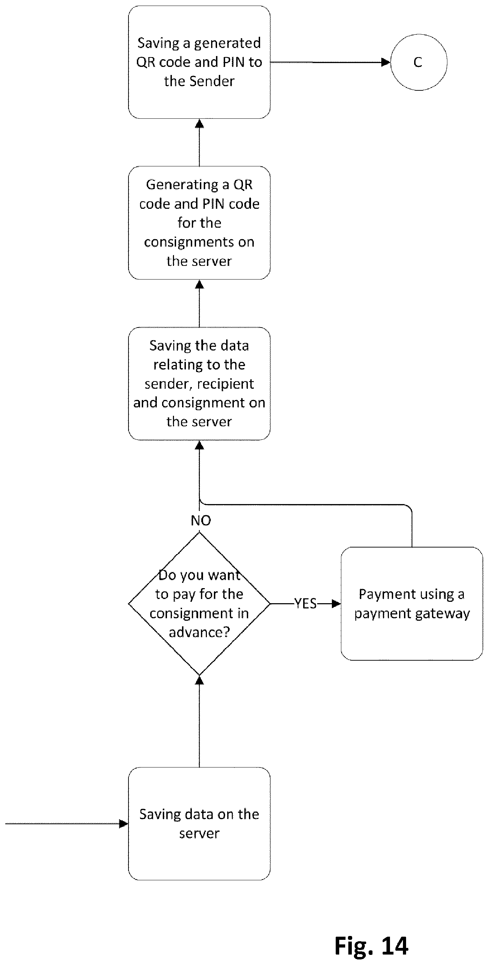

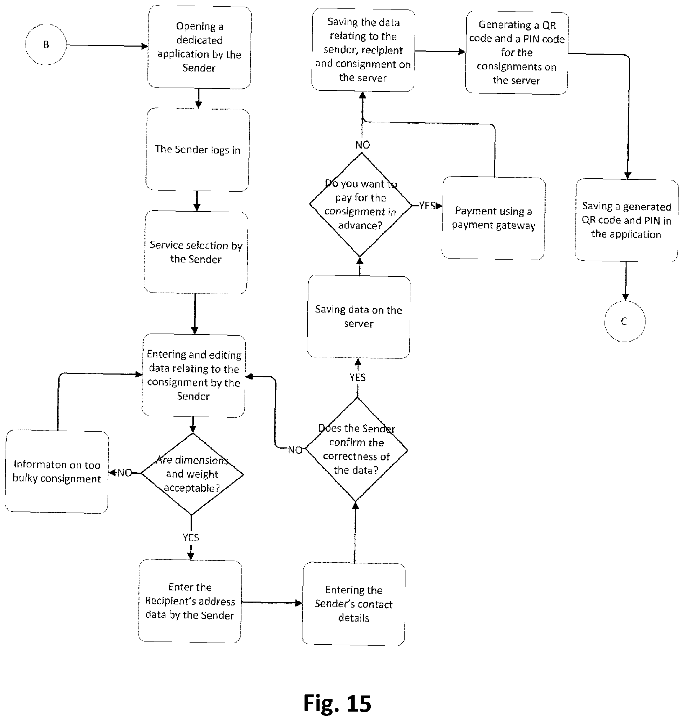

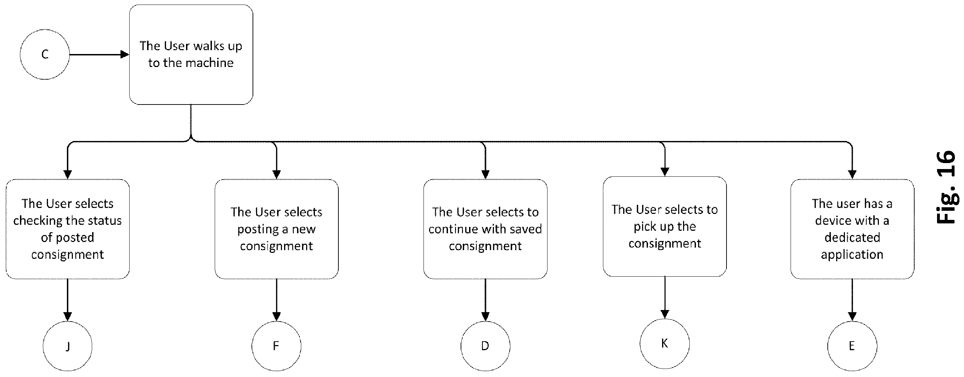

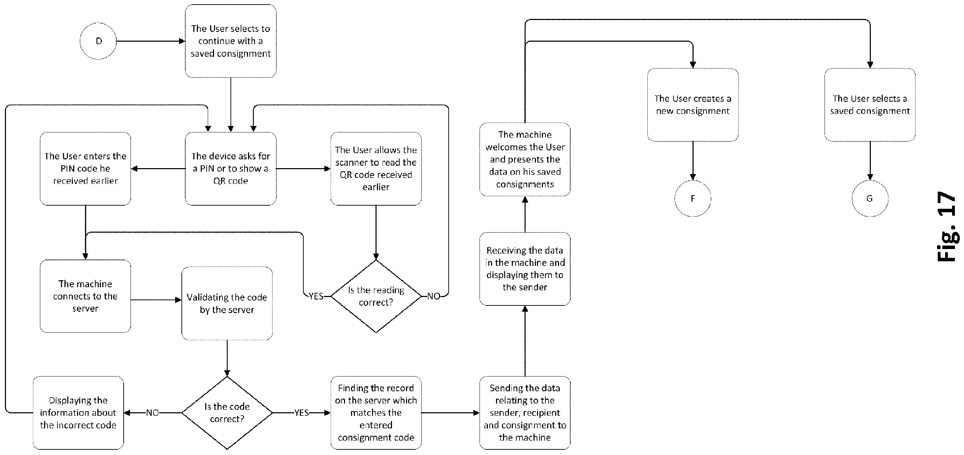

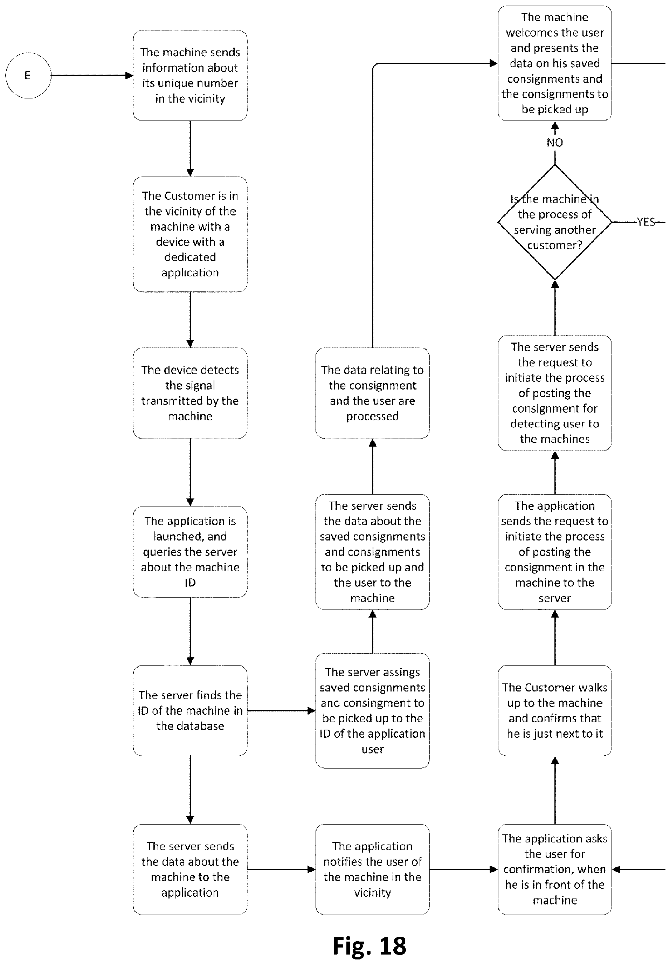

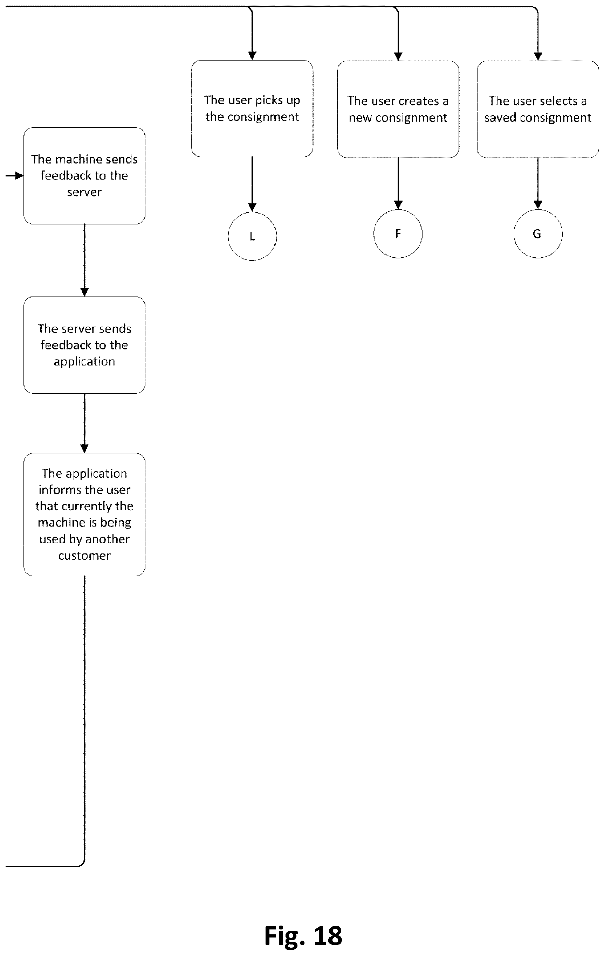

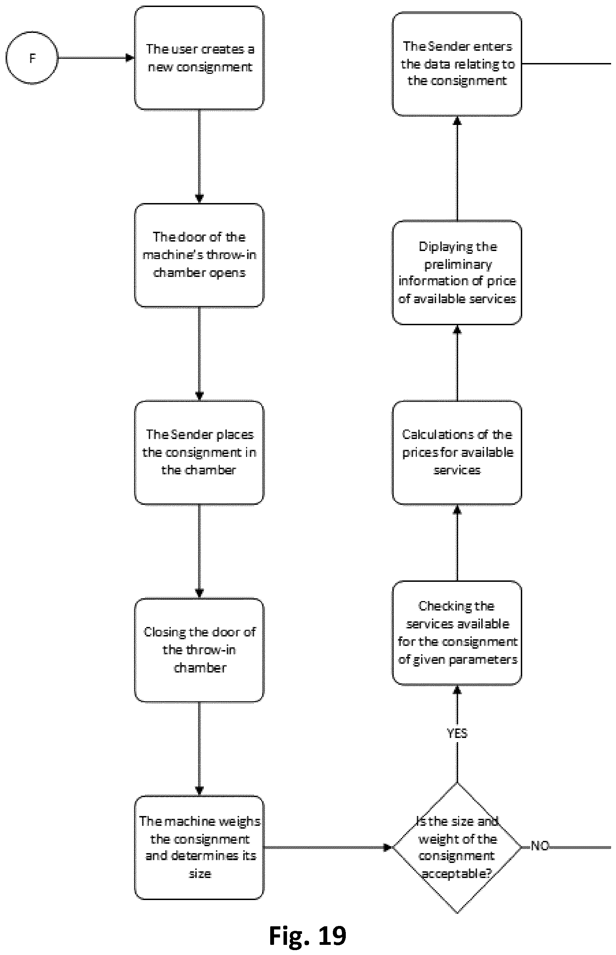

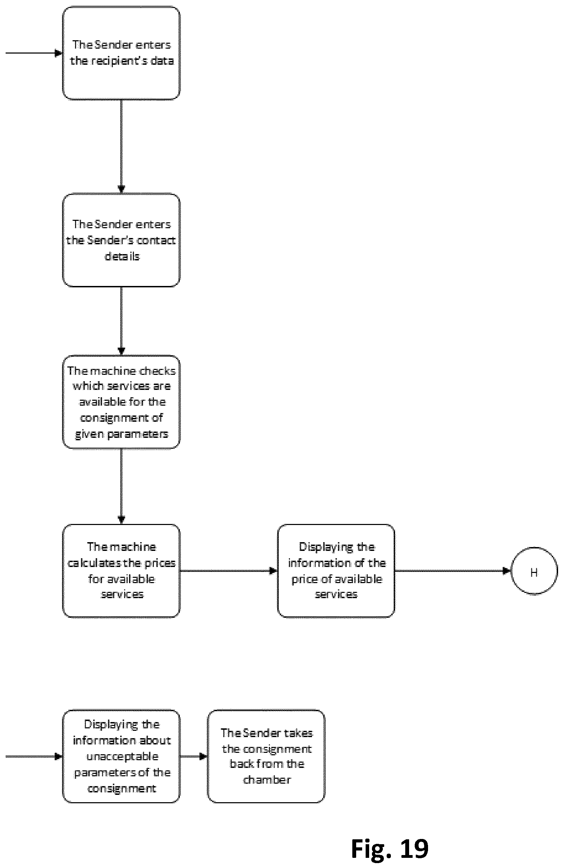

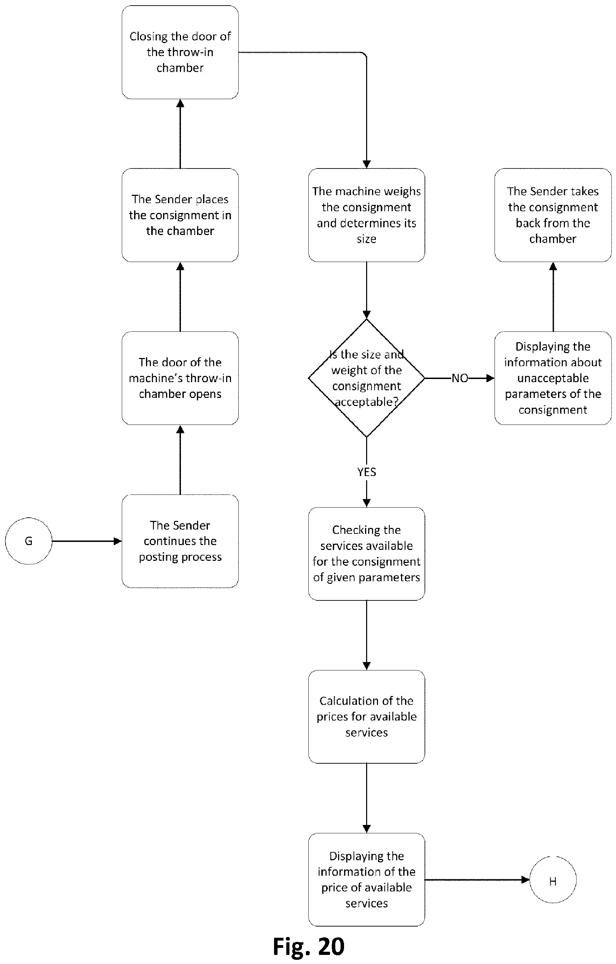

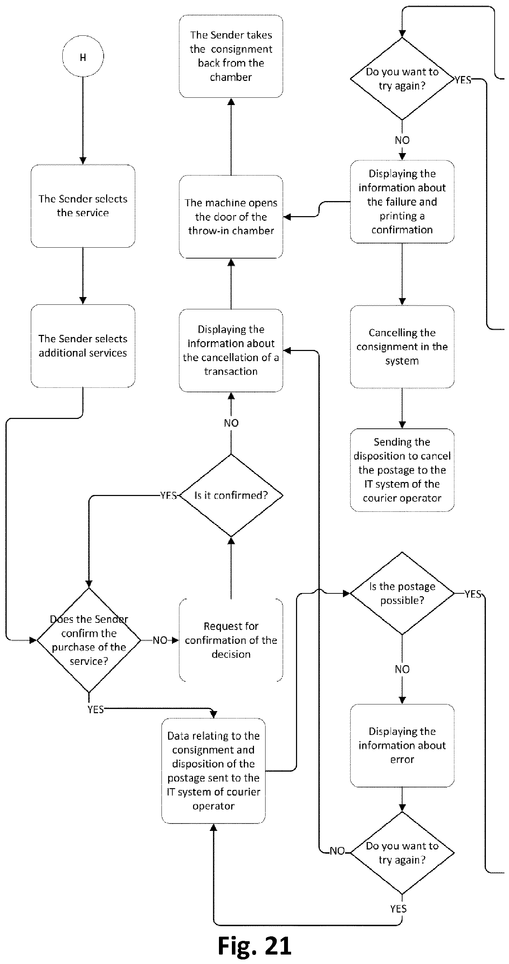

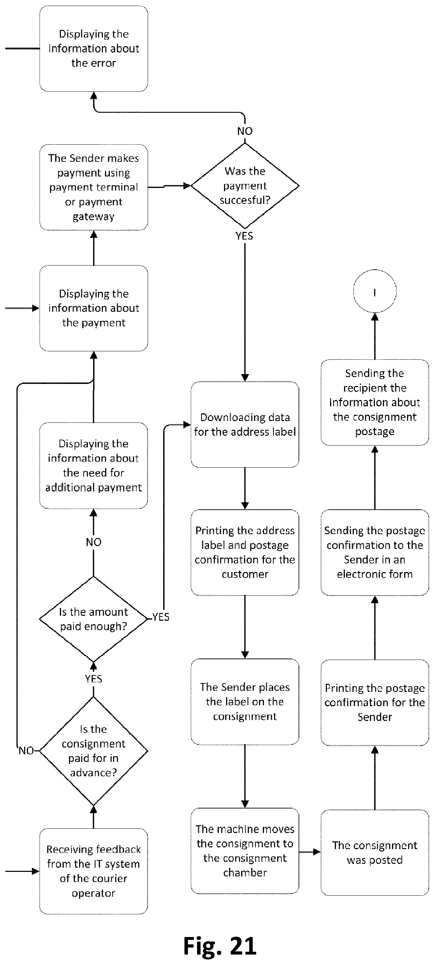

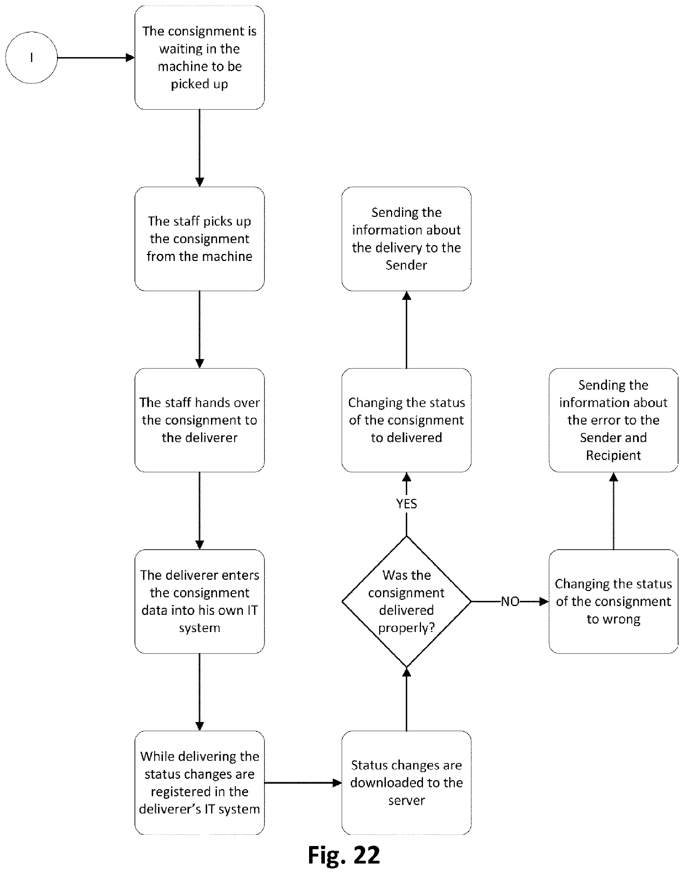

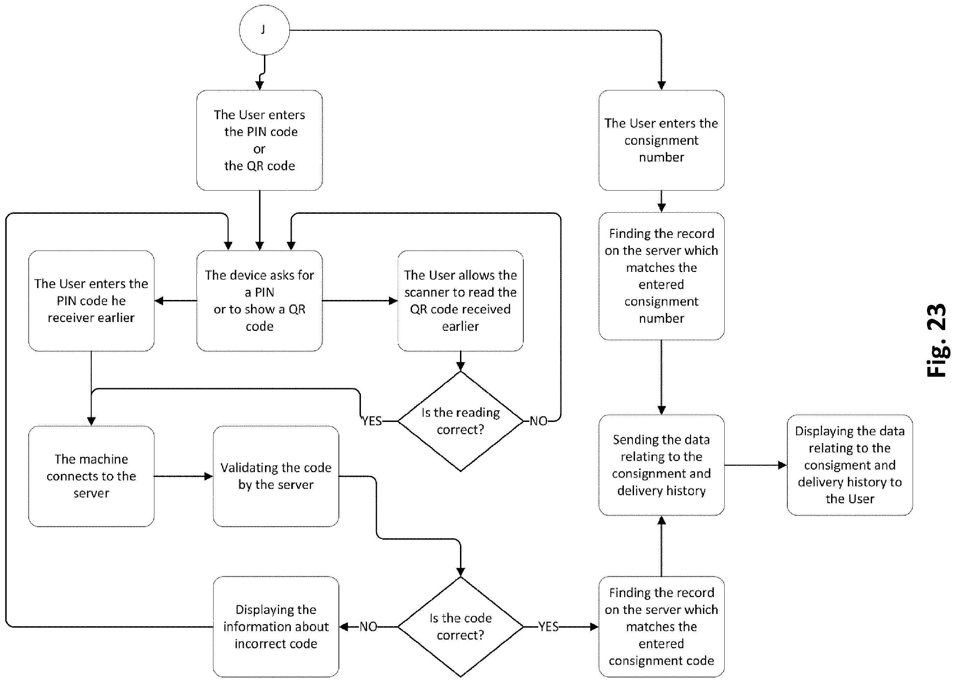

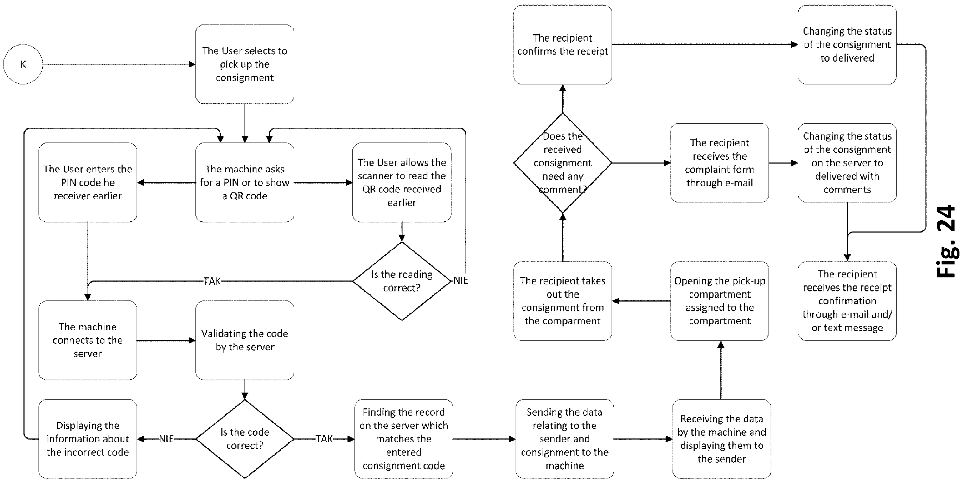

The object of the invention is presented in an embodiment in the accompanying drawing, in which Fig. 1, Fig. 2 and Fig. 3 show a dimetric projection of a device for sending consignments, Fig. 4 , Fig. 5 and Fig. 6 show a dimetric projection of a device for sending and picking up consignments, Fig. 7 shows a device for sending and picking up consignments with a visible consignment in the pick-up compartment, Fig. 8 shows a device for sending consignments, viewed from the front, Fig. 9 shows a cross section of a device for sending consignments, with a sliding mechanism, Fig. 10 shows a process of sliding collection of the consignments for sending the consignments, Fig. 11 and Fig. 12 illustrate a cross section of a device for sending consignments with a rotary mechanism, viewed from the front and from the side, Fig. 13 shows a process of rotary collection of consignments. In turn, Figs 14-24 illustrate exemplary embodiments of the various steps of the method of handling the consignments according to the present invention. Thus, Fig. 14 shows an initial stage of the method of posting the consignments via the web page, Fig. 15 shows an initial stage of the method of posting the consignments through the consignment application, Fig. 16 shows examples of the sender actions directly on the device, Fig. 17 shows the sender entering a unique code, Fig. 18 shows a remote identification of the sender by the device, Fig. 19 shows posting a consignment, Fig. 20 shows the continuation of consignment postage, Fig. 21 shows handling by the sender, Fig. 22 shows a stage of the method of handling consignments - consignment delivery, Fig. 23 shows consignment monitoring and Fig. 24 shows collection of a verification code of the consignment.

The following examples illustrate selected embodiments of the invention, both in terms of scope of the device and method. These examples are within the scope of the claims of the present application, but do not cover all possible embodiments defined by these claims. Depending on the context (posting or picking up the consignment) the user of the system in the following examples is sometimes also referred to as the sender or recipient.

### Example 1.

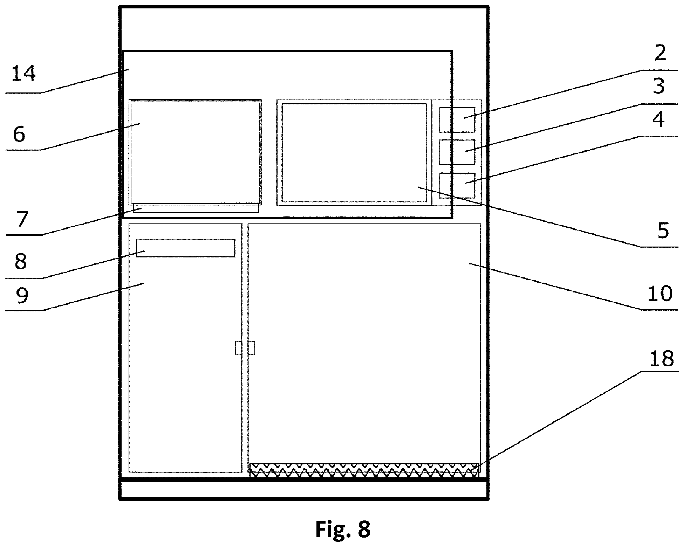

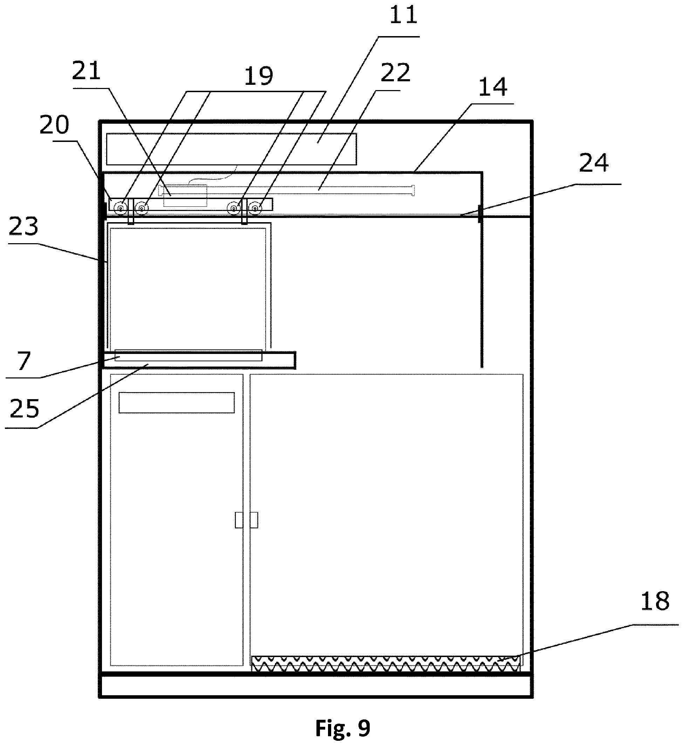

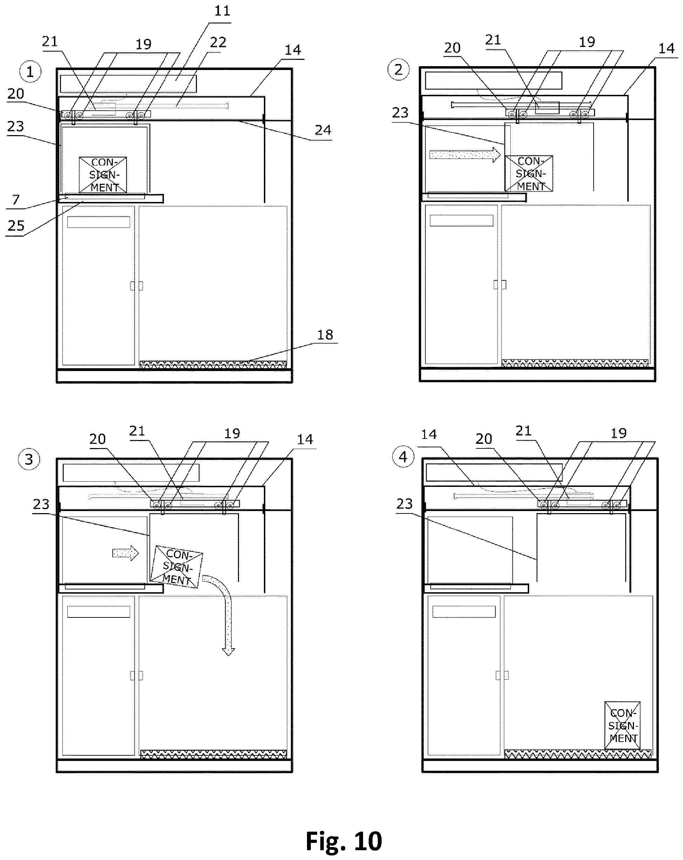

A device for handling (sending) consignments (fig. 8-10), having the form of an external, stand-alone device, provided with a control computer 11 with an Internet communication module 12, has a chamber 6 in the front wall for throwing in the consignments, touch screen 5, payment terminal 2, 2D-code reader 3, address label printer 4, and letters chamber 9 locked with an electro-lock 17 provided with a fill level sensor 16 and a consignment chamber 10 provided with a fill level sensor 15, locked with an electro-lock 17. The control computer 11 connected to a payment terminal 2, touch screen 5, 2D-code reader 3, address label printer 4, electro-locks 17, consignment chamber 9 fill level sensor 15 an letters chamber 10 fill level sensor 16, as well as the Internet communication module 12 and short-range communication module 13. A scales 7 is mounted on a shelf 25 in the chamber 6 for throwing in the consignments. The chamber 6 for throwing in the consignments is equipped with a sliding drawer 23 suspended on the guide 24 provided with the trolley 20 rollers 19 coupled with a drive 21 mounted on the guide 22. The control computer 11 is connected to the drive 21. The chamber 6 is mounted inside the throw-in chamber module 14. The consignment chamber 10 is provided with a a damping mat 18. The door of the letters chamber 9 is provided with the insertion slot 8. The device is equipped with a roof. 1

### Example 2.

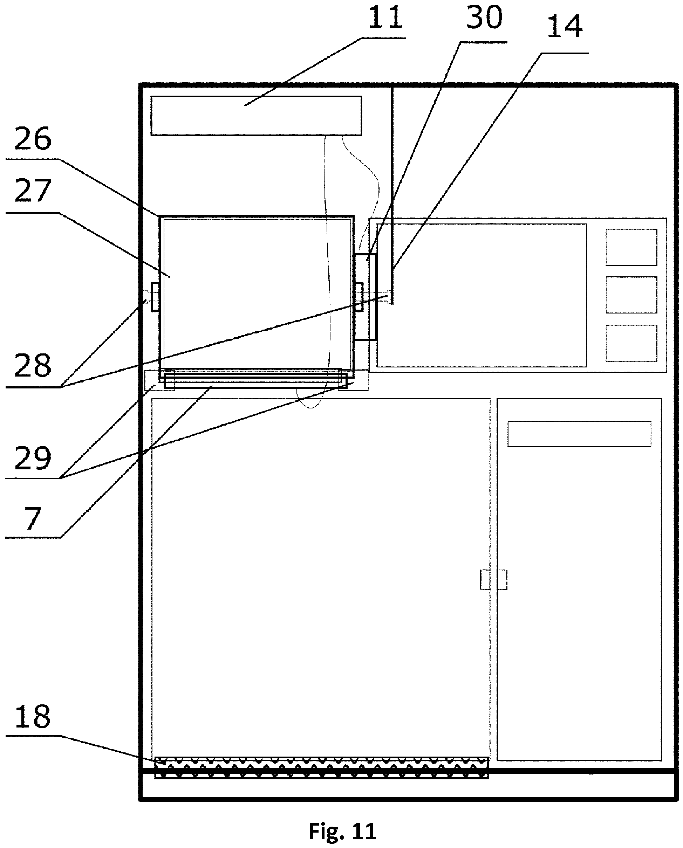

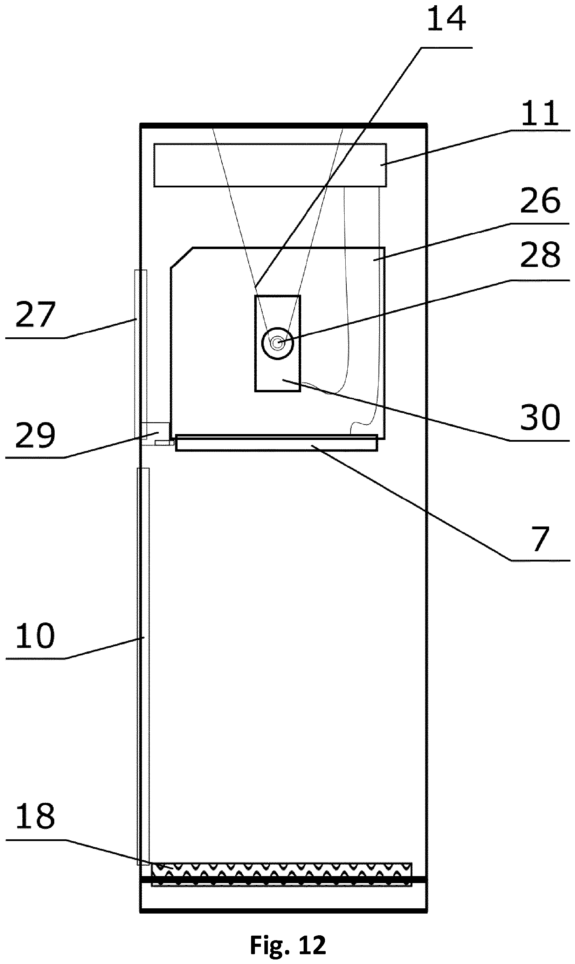

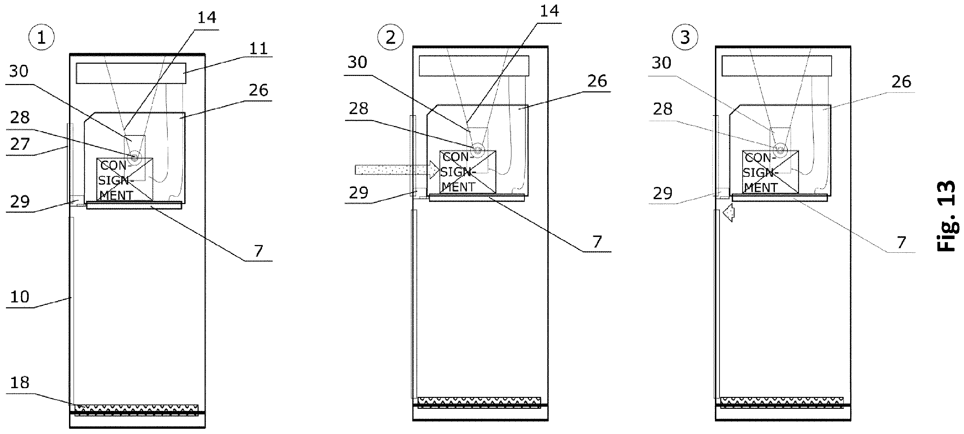

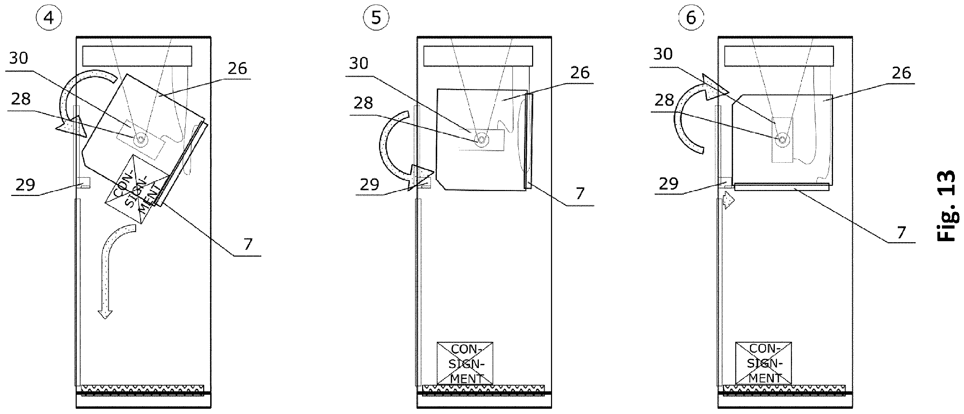

A device for handling (sending) consignments (fig. 11-13), having the form of an external, stand-alone device, provided with a control computer 11 with an Internet communication module 12, has a chamber 6 consignments in the front wall for throwing in the, a touch screen 5, a payment terminal 2, a 2D-code reader 3, address label printer 4, and letters chamber 9 locked with an electro-lock 17 provided with a fill level sensor 16 and a consignment chamber 10 provided with a full signal 15, locked with an electro-lock 17. The control computer 11 connected to a payment terminal 2, touch screen 5, 2D-code reader 3, address label printer 4, electro-locks 17, consignment chamber 9 fill level sensor 15 and letters chamber 10 fill level sensor 16, as well as the Internet communication module 12 and short-range communication module 13. A scales 7 is mounted on a shelf 25 in the chamber 6 for throwing in the consignments. The chamber 6 for throwing in the consignments has a form a rotary chamber 26 axially fixed to the frame 28, with the rotary movement obtained by the axial drive 30, the rotary movement is restricted by the locking element 29. The control computer 11 is connected to the drive 30 and a locking element. The chamber 6 is mounted inside the throw-in chamber module 14. The consignment chamber 10 is provided with a damping mat 18. The door of the letters chamber 9 is provided with the insertion slot 8. The device is equipped with a roof 1.

### Example 3.

A method of sending the consignments, using a using a computer network through a website, by means of which a code individualizing the service is obtained, characterized in that the user (sender) opens a website via the computer network and then logs into the portal having access to the relevant databases, in particular containing a database of predefined users and selects the type of service. Then the sender enters and edits the data concerning the consignment, in particular enters the dimension and weight of the consignment, enters the recipient address data, sender contact details, then the sender confirms their accuracy and saves the information on the server. The sender may carry out the process of entering and editing the data concerning the consignment both on a portable communication device, a home computer, as well as directly with the touch screen 5 of the device for posting consignments. If the dimensions and/or weight entered by the sender in the process of entering and editing the data concerning the consignment exceed the limit values then the information of the large-size consignment is entered. Then the consignment is being paid for, using the payment gateway. Paying for the service in the process of entering and editing the data concerning the consignment takes place as a prepayment when entering data on the website or when posting the consignment using a payment terminal 2 mounted in the device for sending consignments. Information is saved on the server and individual code for the consignment is generated, which shall be delivered through the Internet and/or the sender text message. Then the sender sends the consignment in the device for sending consignments, in the process of posting the consignment, in particular the sender selects posting a new consignment, entering a previously obtained code on the touch screen 5, which is verified with the information saved on the server, then the door of the throw-in chamber 6 opens, the sender places a consignment in the chamber 6, then the door of the chamber 6 closes, the consignment is weighed, the services available for the consignment are being checked, the fees are verified, the information concerning the consignment is displayed on the touch screen 5. If the consignment in the process of posting exceeds the maximum weight, the door of the chamber 6 opens and the consignment is returned to the sender. If the consignment in the process of posting is not paid for properly and/or there is no feedback from the information system of the courier operator the chamber 6 door opens and the consignment is returned to the sender. The sender confirms the purchase of the service, and the data concerning the consignment and disposition of posting the consignment is sent to the courier operator. Then the recipient address data is retrieved from the server and self-adhesive address label of the consignment and postage confirmation for the user is printed, and the user sticks the self-adhesive address label of the recipient on the consignment, then the consignment is automatically moved to the consignment chamber 10. The consignment is moved to chamber 10 from a chamber 6 for throwing in the consignments by sliding movement of a drawer 23 or by rotating movement of the rotary chamber 26, depending on the design of the device for handling consignments. If the consignment in the posting process is placed in the consignment chamber 10 then the sender receives an electronic confirmation of posting the consignment via the computer network. After entering the code obtained in the process of entering and editing the data concerning the consignment on the website or in the device for posting consignments the sender receives the information about the process of delivery.

### Example 4.

A method of sending the consignments, using a using a computer network through a website, by means of which a code individualizing the service is obtained, is characterized in that the user (sender) opens a website via the computer network and then logs into the portal having access to the relevant databases, in particular containing a database of predefined users and selects the type of service. Then the sender enters and edits the data concerning the consignment, in particular enters the dimension and weight of the consignment, enters the recipient address data, sender contact details, then the sender confirms their accuracy and saves the information on the server. The sender may carry out the process of entering and editing the data concerning the consignment both on a portable communication device, a home computer, as well as directly with the touch screen 5 of the device for posting consignments. If the dimensions and/or weight entered by the sender in the process of entering and editing the data concerning the consignment exceed the limit values then the information of the large-size consignment is entered. Then the consignment is being paid for, using the payment gateway. Paying for the service in the process of entering and editing the data concerning the consignment takes place as a prepayment when entering data on the website or when posting the consignment using a payment terminal 2 mounted in the device for sending consignments. Information is saved on the server and individual code for the consignment is generated, which shall be delivered through the Internet and/or the sender text message. The device for posting consignments automatically identifies the sender through the information received from the sender's communication device. In this process of communication between the device for posting consignments and the terminal used by the user (e.g. smartphone, tablet, laptop) communication techniques known in the art are used, such as bluetooth, NFC (*Near Field Communication*), scanning the barcode or QR code displayed on the screen of the user terminal etc. Then the device for posting consignments automatically retrieves appropriate information concerning the consignment saved on the server. Then the sender sends the consignment in the device for sending consignments, in the process of posting the consignment, in particular the sender selects posting a new consignment, entering a previously obtained code on the touch screen 5, which is verified with the information saved on the server, then the door of the throw-in chamber 6 opens, the sender places a consignment in the chamber 6, then the door of the chamber 6 closes, the consignment is weighed, the services available for the consignment are being checked, the fees are verified, the information concerning the consignment is displayed on the touch screen 5. If the consignment in the process of posting exceeds the maximum weight, the door of the chamber 6 opens and the consignment is returned to the sender. If the consignment in the process of posting is not paid for properly and/or there is no feedback from the information system of the courier operator the chamber 6 door opens and the consignment is returned to the sender. The sender confirms the purchase of the service, and the data concerning the consignment and disposition of posting the consignment is sent to the courier operator. Then the recipient address data is retrieved from the server and self-adhesive address label of the consignment and postage confirmation for the user is printed, and the user sticks the self-adhesive address label of the recipient on the consignment, then the consignment is automatically moved to the consignment chamber 10. The consignment is moved to chamber 10 from a chamber 6 for throwing in the consignments by sliding movement of a drawer 23 or by rotating movement of the rotary chamber 26, depending on the design of the device for handling consignments. If the consignment in the posting process is placed in the consignment chamber 10 then the sender receives an electronic confirmation of posting the consignment via the computer network. After entering the code obtained in the process of entering and editing the data concerning the consignment on the website or in the device for posting consignments the sender receives the information about the process of delivery.

### Example 6.

A device for handling (picking up) consignments has the form of an external, stand-alone device, provided with the elements of devices described in examples 1 and 2 and at least one picking up module comprising at least one pick-up compartment 34, provided with the opening door 31 lockable with an electro-lock 32, the electro-lock being connected and controlled by the control computer 11. The picking up module may comprise a number of pick-up compartments 34, with different or the same height, separated by the shelves 33, and interconnected with a joint structure and the outer casing. The picking up module may be provided with a roof.

### Example 7.

### Picking up the consignments using a code:

At the time of delivering the consignment to the device for handling (picking up) consignments, the deliverer logs into the device using a touch screen and scans the consignment label provided with a graphic code using a 2D-code reader 3. The device retrieves information concerning the consignment from the server and selects the size of the compartment corresponding to the size of the consignment. The device opens the compartment using an electro-lock 32.

The deliverer places the consignment in the open pick-up compartment 34.

The moment the deliverer places the consignment in the compartment, the system records the fact of delivering the consignment to a given device. The systems sends the information on the delivery of the consignment to the recipient via the Internet and/or text message together with a digital verification code and a graphic code.

The recipient selects the option of picking up the consignment on the touch screen and enters the verification code using the on-screen keyboard, alternatively, scans the graphic code received using the 2D-code reader 3. The device compares the code entered with the codes assigned to the consignments waiting to be picked up in the pick-up compartments. If it is compliant, the device opens the electro-lock of the compartment assigned to the consignment by means of the control computer. The recipient takes the consignment out of the compartment and confirms the pick-up on the touch screen. The pick-up is recorded in the system, and the recipient receives a pick-up confirmation via the Internet (e-mail) and /or text message.

### Example 8.

### Picking up the consignments using the application on the portable device:

At the time of delivering the consignment to the device for handling (picking up) consignments, the deliverer logs into the device using a touch screen and scans the consignment label provided with a graphic code using a 2D-code reader 3. The device retrieves information concerning the consignment from the server and selects the size of the compartment corresponding to the size of the consignment. The device opens the compartment door 31 using an electro-lock 32.

The deliverer places the consignment in the open pick-up compartment 34.

The moment the deliverer places the consignment in the compartment, the system records the fact of delivering the consignment to a given device. The systems sends the information on the delivery of the consignment to the recipient's portable device and at the same time sends the information to the recipient via the Internet and/or text message together with a digital verification code and a graphic code.

When the recipient approaches the consignment pick-up device with a portable device (terminal), a device for picking up consignments will recognize the user's terminal. In this process for communication between the device for picking up consignments and the terminal used by the user (e.g. smartphone, tablet, laptop) communication techniques known in the art are used, such as bluetooth, NFC (*Near Field Communication*), WiFi, or other methods of communication based on radio waves, ultrasonic communication, visible light communication, infrared, ultraviolet, scanning the barcode, QR code or other graphic code displayed on the screen of the user terminal etc. Then the device for picking up consignments automatically connects to the server sending the data retrieved from the user terminal receiving the information concerning the user and consignments waiting to be picked up, assigned to or corresponding to the recognized user terminal. The terminal can be identified in particular by the corresponding identification number of the terminal which the consignment pick-up device sends to the server.

The recipient confirms on the portable terminal his presence in front of the device for picking up the consignments and the consignments to be picked up are displayed on the touch screen. The recipient selects the option of picking up the consignment on the touch screen, the device opens the electro-lock of the compartment assigned to the consignment by means of the control computer. The recipient takes the consignment out of the compartment and confirms the pick-up on the touch screen of the device. The pick-up is recorded in the system, and the recipient receives a pick-up confirmation on the portable terminal via the Internet (e-mail) and /or text message.

## Claims

1. A method of handling consignments, implemented in a system comprising a device for handling consignments, a user terminal and a server and a database, the database containing predefined users and data concerning their consignments, and the server has access to this database and can communicate with said device for handling consignments, and the user terminal via a telecommunication network, preferably the Internet, wherein the device for handling consignments is in the form of an external, stand-alone device, provided with a control computer with an Internet communication module, a chamber (6) for throwing in the consignments, a touch screen (5) and an address label printer (4), and a consignment chamber (10) lockable with an electro-lock (17) also provided with a fill level sensor (15), the control computer (11) being connected to the touch screen (5), address label printer (4), electro-locks (17), consignment chamber (10) fill level sensor (15), as well as the Internet communication module (12) and short-range communication module (13),
the method comprising the following steps:
a) the user using the user terminal logs on to the server via a telecommunication network, selects the type of service - postage and then enters the data on the sent consignment into the database and confirms their accuracy and the information is saved in the database,
b) the server generates a unique consignment code which is sent from the server to the user terminal through a telecommunication network,
c) the user selects, in the device for handling consignments, posting a new consignment and enters said unique consignment code into the device for handling consignments, wherein entering said unique consignment code into the device for handling consignments is performed through the communication between the device for handling consignments and the user terminal,
thereafter the device for handling consignments is sending the code entered through the telecommunication network to the server for verification, and then the server sends the result of the code verification back to the device for handling consignments,
d) the device for handling consignments opens the door to the throw-in chamber (6), the user places the consignment in the chamber (6) and then the door of the chamber (6) closes and the consignment is weighed and/or measured, and then through the communication between the device for handling consignments and the server checks services available for the consignment, or verification of the fees, displays on the display (5) the information about the consignment, then the user confirms the purchase of the service, then the device for handling consignments sends the data concerning the consignment and disposition of postage of the consignment to a server of the courier operator, receives the feedback from the server of the courier operator, then retrieves the recipient address data from the server and prints the self-adhesive address label of the consignment and the postage confirmation for the user, door opens and the user sticks the self-adhesive address label of the recipient on the consignment, or if it turns out that the consignment exceeds the maximum weight and/or size and/or was not paid for properly and/or there is no feedback from the server of the courier operator the chamber (6) door opens and the consignment is returned to the sender,
e) the device for handling consignments moves the consignment automatically to the consignment chamber (10), by sliding movement of a drawer (23) or by rotating movement of a rotary chamber (26), depending on the design of the device for handling consignments,
f) the device for handling consignments prints the consignment postage confirmation and/orthe consignment postage confirmation will be sent to the user terminal through the telecommunication network, in particular as an e-mail or text message.

2. The method according to claim 1 **characterized in that** before stage b) the user pays for the consignment and for taking payments uses a payment terminal (2) built-in the device for handling consignments or the Internet payment gateway or a terminal user or charging the prepayment disclosed in said database.

3. The method according to claim 1 or 2 **characterized in that** the user terminal is a terminal separate from the device, in particular a desktop, laptop, tablet or mobile phone.

4. The method according to any of the preceding claims **characterized in that** the device for handling consignments further comprises a letters chamber (9) lockable with an electro-lock (17) equipped with a fill level sensor (16) connected to the control computer (11).

5. The method according to any of the preceding claims **characterized in that** the device for handling consignments further comprises a payment terminal (2) connected to the control computer (11).

6. The method according to any of the preceding claims **characterized in that** the data of the consignment entered by the user into the database in step a) are size and weight of the consignment, address data, sender's contact information, and if the user does not confirm the accuracy of the recipient address data and/or the sender contact details, then it is re-entered and data relating to the consignment is edited, and if the size and/or weight of the consignment entered by the user exceed the limit values, then the information of the large-size consignment is entered into the database.

7. The method according to any of the preceding claims **characterised in that** entering said unique consignment code into the device for handling consignments is performed through the communication between the device for handling consignments and the user terminal in Bluetooth technology, NFC (*Near Field Communication*), WiFi, or other methods of communication based on radio waves, ultrasonic communication, visible light communication, infrared or ultraviolet.

## Patentansprüche

1. Ein Verfahren zum Handhaben von Sendungen, implementiert in einem System, das eine Vorrichtung zum Handhaben von Sendungen, ein Benutzerendgerät und einen Server und eine Datenbank umfasst, wobei die Datenbank vordefinierte Benutzer und Daten über ihre Sendungen enthält, und der Server Zugriff auf diese Datenbank hat und mit der Vorrichtung zum Handhaben von Sendungen und dem Benutzerendgerät über ein Telekommunikationsnetzwerk, vorzugsweise das Internet, kommunizieren kann,
wobei die Vorrichtung zum Handhaben von Sendungen in Form einer externen, eigenständigen Vorrichtung vorliegt, die mit einem Steuerrechner mit einem InternetKommunikationsmodul, einer Kammer (6) zum Einwerfen der Sendungen, einem Touchscreen (5) und einem Adressetikettendrucker (4) und einer mit einem Elektroschloss (17) abschließbaren Konsignationskammer (10) versehen ist, die ebenfalls mit einem Füllstandssensor (15) versehen ist, wobei der Steuerrechner (11) mit dem Touch-Bildschirm (5), dem Adressetikettendrucker (4), dem Elektroschloss (17), dem Füllstandssensor (15) der Konsignationskammer (10) sowie dem Internetkommunikationsmodul (12) und dem Nahbereichskommunikationsmodul (13) verbunden ist, wobei das Verfahren die folgenden Schritte umfasst:
a) Der Benutzer, der das Benutzerendgerät benutzt, meldet sich über ein Telekommunikationsnetz am Server an, wählt die Art der Dienstleistung - Porto - aus und gibt dann die Daten der gesendeten Sendung in die Datenbank ein und bestätigt deren Richtigkeit und die Informationen werden in der Datenbank gespeichert,
b) der Server erzeugt einen eindeutigen Sendungscode, der vom Server über ein Telekommunikationsnetz an das Benutzerendgerät gesendet wird,
c) der Benutzer in der Vorrichtung zur Handhabung von Sendungen eine neue Sendung auswählt und den eindeutigen Sendungscode in die Vorrichtung zur Handhabung von Sendungen eingibt, wobei die Eingabe des eindeutigen Sendungscodes in die Vorrichtung zur Handhabung von Sendungen durch die Kommunikation zwischen der Vorrichtung zur Handhabung von Sendungen und dem Benutzerendgerät erfolgt, danach die Vorrichtung zur Handhabung von Sendungen den über das Telekommunikationsnetz eingegebenen Code zur Überprüfung an den Server sendet und dann der Server das Ergebnis der Codeverifizierung an die Vorrichtung zur Handhabung von Sendungen zurücksendet,
d) die Vorrichtung zur Handhabung von Sendungen öffnet die Tür zur Einwurfkammer (6), der Benutzer legt die Sendung in die Kammer (6) und dann schließt sich die Tür der Kammer (6) und die Sendung wird gewogen und/oder gemessen, und dann durch die Kommunikation zwischen der Vorrichtung zur Handhabung von Sendungen und den für die Sendung verfügbaren Server-Kontrolldiensten, oder Überprüfung der Gebühren, zeigt auf dem Display (5) die Informationen über die Sendung an, dann bestätigt der Benutzer den Kauf der Dienstleistung, dann sendet die Vorrichtung zur Bearbeitung von Sendungen die Daten über die Sendung und die Disposition des Postens der Sendung an einen Server des Kurierbetreibers, empfängt die Rückmeldung vom Server des Kurierdienstes, holt dann die Empfängeradressdaten vom Server ab und druckt das selbstklebende Adressaufkleber der Sendung und die Freimachungsbestätigung für den Benutzer, die Tür öffnet sich und der Benutzer klebt das selbstklebende Adressaufkleber des Empfängers auf die Sendung, oder wenn sich herausstellt, dass die Sendung das maximale Gewicht und/oder die maximale Größe überschreitet und/oder nicht ordnungsgemäß bezahlt wurde und/oder es keine Rückmeldung vom Server des Kurierdienstes gibt, öffnet die Kammer (6) die Tür und die Sendung wird an den Absender zurückgegeben,
e) die Vorrichtung zur Handhabung von Sendungen, die Sendung automatisch in die Konsignationskammer (10) bewegt, durch Verschieben einer Schublade (23) oder durch Drehen einer Drehkammer (26), je nach Ausführung der Vorrichtung zur Handhabung von Sendungen,
f) die Vorrichtung zur Sendungsbearbeitung die Sendungsportobestätigung und/oder die Sendungsportobestätigung an das Benutzerendgerät über das Telekommunikationsnetz, insbesondere als E-Mail oder SMS, druckt.

2. Das Verfahren nach Anspruch 1, **dadurch gekennzeichnet, dass** der Benutzer vor Schritt b) für die Sendung und für die Entgegennahme von Zahlungen ein Zahlungsterminal (2) verwendet, das in die Vorrichtung zur Handhabung von Sendungen oder das Internet-Zahlungsportal oder einen Terminalbenutzer eingebaut ist, oder die in der Datenbank offenbarte Vorauszahlung berechnet.

3. Das Verfahren nach Anspruch 1 oder 2, **dadurch gekennzeichnet, dass** das Benutzerendgerät ein von der Vorrichtung getrenntes Endgerät ist, insbesondere ein Desktop, Laptop, Tablett oder Mobiltelefon.

4. Das Verfahren nach einem der vorstehenden Ansprüche, **dadurch gekennzeichnet, dass** die Vorrichtung zum Handhaben von Sendungen ferner eine mit einem Elektroschloss (17) abschließbare Buchstabenkammer (9) umfasst, die mit einem Füllstandssensor (16) ausgestattet ist, der mit dem Steuerrechnerr (11) verbunden ist.

5. Das Verfahren nach einem der vorhergehenden Ansprüche, **dadurch gekennzeichnet, dass** die Vorrichtung zur Handhabung von Sendungen ferner ein Zahlungsterminal (2) umfasst, das mit dem Steuerrechner (11) verbunden ist.

6. Das Verfahren nach einem der vorhergehenden Ansprüche, **dadurch gekennzeichnet, dass** die vom Benutzer in Schritt a) in die Datenbank eingegebenen Daten die Größe und das Gewicht der Sendung, Adressdaten, Kontaktinformationen des Absenders sind, und wenn der Benutzer die Richtigkeit der Empfängeradressdaten und/oder der Absenderkontaktdaten nicht bestätigt, dann werden sie erneut eingegeben sowie die Daten der Sendung bearbeitet, und wenn die Größe und/oder das Gewicht der vom Benutzer eingegebenen Sendung die Grenzwerte überschreitet, dann werden die Informationen über die Großsendung in die Datenbank eingegeben.

7. Das Verfahren nach einem der vorhergehenden Ansprüche, **dadurch gekennzeichnet, dass** die Eingabe des eindeutigen Konsignationscodes in die Vorrichtung zur Handhabung von Sendungen durch die Kommunikation zwischen der Vorrichtung zur Handhabung von Sendungen und dem Benutzerendgerät in Bluetooth-Technologie, NFC (*Near Field Communication*), WiFi oder anderen Kommunikationsverfahren basierend auf Funkwellen, Ultraschallkommunikation, Kommunikation mit sichtbarem Licht, Infrarot oder Ultraviolett erfolgt.

## Revendications

1. Une méthode de traitement des envois, implémentée dans un système comprenant un dispositif de traitement des envois, un terminal d'utilisateur et un serveur et une base de données, la base de données contenant des utilisateurs prédéfinis et des données concernant leurs envois, et le serveur a accès à cette base de données et peut communiquer avec ledit dispositif de traitement des envois, et le terminal d'utilisateur via un réseau de télécommunication, de préférence l'Internet,
dans laquelle le dispositif de traitement des envois se présente sous la forme d'un dispositif externe autonome, muni d'un ordinateur de commande avec un module de communication Internet, d'une chambre (6) pour insérer des envois, d'un écran tactile (5) et d'une imprimante d'étiquettes d'adresse (4) et une chambre d'expédition (10) pouvant être verrouillée avec une serrure électrique (17) également munie d'un capteur de niveau de remplissage (15), l'ordinateur de commande (11) étant connecté à l'écran tactile (5),
l'imprimante d'étiquettes d'adresse (4), les serrures électriques (17), la chambre de distribution (10), le capteur de niveau de remplissage (15), ainsi que le module de communication Internet (12) et le module de communication à courte portée (13), la méthode comprenant les étapes suivantes:
a) l'utilisateur qui utilise le terminal d'utilisateur se connecte au serveur via un réseau de télécommunication, sélectionne le type de service - postage, et puis introduit les données de l'envoi envoyé dans la base de données et confirme leur exactitude et les informations sont enregistrées dans la base de données,
b) le serveur génère un code d'envoi unique qui est envoyé du serveur au terminal d'utilisateur via un réseau de télécommunication,
c) l'utilisateur sélectionne, dans le dispositif de traitement des envois, le postage d'un nouveau envois et introduit ledit code d'envois unique dans le dispositif de traitement des envois, où l'introduction dudit code d'envois unique dans le dispositif de traitement des envois s'effectue par la communication entre le dispositif de traitement des envois et le terminal d'utilisateur, ensuite le dispositif de traitement des envois envoie le code introduit par le réseau de télécommunication au serveur pour vérification, et puis le serveur renvoie le résultat de la vérification du code au dispositif de traitement des envois,
d) le dispositif de traitement des envois ouvre la porte de la chambre d'insertion (6), l'utilisateur place l'envoi dans la chambre (6), et puis la porte de la chambre (6) se ferme et l'envoi est pesé et/ou mesuré, et puis, via la communication entre le dispositif de traitement des envois et le serveur, vérifie les services disponibles pour l'envoi, ou la vérification des frais, affiche sur l'écran (5) les informations sur l'envoi, puis l'utilisateur confirme l'achat du service, puis le dispositif de traitement des envois envoie les données relatives à l'envoi et à la disposition du postage de l'envoi à un serveur de l'opérateur de courrier, reçoit les informations en retour du serveur de l'opérateur de courrier, récupère ensuite les données d'adresse du destinataire sur le serveur et imprime l'étiquette d'adresse auto-adhésive de l'envoi et la confirmation du postage pour l'utilisateur, la porte s'ouvre et l'utilisateur colle l'étiquette d'adresse auto-adhésive du destinataire sur l'envoi ou s'il s'avère que l'envoi dépasse le poids et/ou la taille maximum et/ou n'a pas été payé correctement et/ou il n'y a pas de retour d'informations du serveur de l'opérateur de courrier, la porte de la chambre (6) s'ouvre et l'envoi est renvoyé à l'expéditeur,
e) le dispositif de traitement des envois déplace automatiquement l'envoi vers la chambre d'envois (10), par un mouvement de coulissement d'un tiroir (23) ou par mouvement de rotation d'une chambre rotative (26), en fonction de la conception du dispositif de traitement des envois,
f) le dispositif de traitement des envois imprime la confirmation du postage d'envoi et/ou la confirmation du postage d'envoi est envoyée au terminal d'utilisateur via le réseau de télécommunication, notamment comme un e-mail ou un message texte.

2. La méthode selon la revendication 1, **caractérisée en ce qu'**avant l'étape b), l'utilisateur paie pour l'envoi et pour des paiements il utilise un terminal de paiement (2) intégré dans le dispositif de traitement des envois, ou la passerelle de paiement Internet, ou un utilisateur du terminal ou charge le prépaiement divulgué dans ladite base de données.

3. La méthode selon la revendication 1 ou 2, **caractérisée en ce que** le terminal d'utilisateur est un terminal séparé du dispositif, en particulier un ordinateur de bureau, un ordinateur portable, une tablette ou un téléphone mobile.

4. La méthode selon l'une quelconque des revendications précédentes, **caractérisée en ce que** le dispositif de traitement des envois comprend en outre une chambre à lettres (9) verrouillable avec une serrure électrique (17) équipée d'un capteur de niveau de remplissage (16) connecté à 'ordinateur de commande (11).

5. La méthode selon l'une quelconque des revendications précédentes, **caractérisée en ce que** le dispositif de traitement des envois comprend en outre un terminal de paiement (2) connecté à 'ordinateur de commande (11).

6. La méthode selon l'une quelconque des revendications précédentes, **caractérisée en ce que** les données de l'envoi introduites par l'utilisateur dans la base de données à l'étape a) sont la taille et le poids de l'envoi, les données d'adresse, les informations de contact de l'expéditeur, et si l'utilisateur ne confirme pas l'exactitude des données d'adresse du destinataire et/ou des coordonnées de l'expéditeur, elles sont ensuite introduites à nouveau et les données relatives à l'envoi sont éditées, et si la taille et/ou le poids de l'envoi introduit par l'utilisateur dépassent les valeurs limites, alors les informations de l'envoi de grande taille sont introduites dans la base de données.

7. La méthode selon l'une quelconque des revendications précédentes, **caractérisée en ce que** l'introduction dudit code d'envois unique dans le dispositif de traitement des envois est effectuée via la communication entre le dispositif de traitement des envois et le terminal d'utilisateur en technologie Bluetooth, NFC (*Near Field Communication*), WiFi , ou d'autres méthodes de communication basées sur les ondes radio, la communication par ultrasons, la communication par la lumière visible, infrarouge ou ultraviolette.
